# EUROPÄISCHE PATENTSCHRIFT

(11) **EP 3 208 161 B1**
(45) Veröffentlichungstag und Bekanntmachung des Hinweises auf die Patenterteilung: **17.06.2020**
(21) Anmeldenummer: 17156400.8
(22) Anmeldetag: 16.02.2017
(51) Int. Cl.: B60S 9/02, B60S 9/22, B62D 21/02, B60S 9/12

(54) **FAHRGESTELL**
CHASSIS
CHÂSSIS

(30) Priorität: 17.02.2016 DE 202016100825 U; 15.12.2016 DE 202016107009 U
(43) Veröffentlichungstag der Anmeldung: 23.08.2017
(73) Patentinhaber: Alois Kober GmbH, 89359 Kötz (DE)
(72) Erfinder: LUKAS, Maximilian, 86842 Türkheim (DE); KNAIER, Magnus, 89346 Bibertal-Bühl (DE); MAYER, Werner, 89359 Kötz (DE); SCHLERETH, Christoph, 89441 Medlingen (DE); SETZER, Mirco, 89129 Langenau (DE); MATERNE, Manfred, 89362 Offingen (DE); WILLMANN, Uwe, 89359 Kleinkötz (DE); HERMELING, Frank, 86381 Krumbach (DE)
(74) Vertreter: Ernicke, Klaus Stefan

(56) Entgegenhaltungen:
- EP-A1- 1 634 798
- DE-U1-202009 005 194
- US-A- 4 067 543
- US-A- 4 815 711
- US-A- 5 676 385
- US-A1- 2006 163 551
- US-A1- 2009 179 400
- US-A1- 2011 305 550
- US-A1- 2015 054 271
- US-B1- 6 196 586

## Beschreibung

Die Erfindung betrifft ein Fahrgestell und ein Straßenfahrzeug mit den Merkmalen der Ansprüche 1 und 14. Ein Fahrgestell mit einer Hubstützenanordnung und ein Straßenfahrzeug sind aus der gattungsgemäßen US 2011/0305550 A1 bekannt.

Das Fahrgestell weist parallele Längsträger auf, an deren rückwärtigem Ende jeweils eine Hubstütze für sich allein seitlich befestigt ist. Auf der Oberseite der parallelen Längsträgerenden und getrennt von den Hubstützen ist eine Ladebordwand mit einem zugehörigen eigenen Stützrahmen montiert.

Die US 6,195,586 B1 zeigt einen Gabelstapler mit ausfahrbaren hydraulischen Stützbeinen, die gelenkig an einer Stützplatte gelagert sind, welche frontseitig am Fahrzeugrahmen montiert ist.

Ein anderes Fahrgestell mit einer Hubstützenanordnung ist aus der Praxis bekannt. Die Hubstützen sind an massiven aufrechten Mittelstegen von Längsträgern außenseitig angeschraubt. Die Trägerstege werden dabei angebohrt.

Die US 2006/0163551 A1 befasst sich mit hydraulischen Hubstützen, die mittels einer Schelle eigenständig an einem Achsrohr montiert sind.

Es ist Aufgabe der vorliegenden Erfindung, eine verbesserte Fahrgestell- und Hubstützentechnik aufzuzeigen.

Die Erfindung löst diese Aufgabe mit den Merkmalen im Hauptanspruch.
Die beanspruchte Fahrgestell- und Hubstützentechnik, d.h. das Fahrgestell und das damit ausgerüstete Straßenfahrzeug, haben verschiedene Vorteile. Die eine oder mehreren Hubstützen können das Fahrgestell und das Straßenfahrzeug besser und sicherer abstützen. Die Hubstütze(n) lassen sich insbesondere mit Leichtbau-Fahrgestellen kombinieren, die dünnwandige Fahrgestellteile aufweisen, welche für die Aufnahme von Stützlasten nicht überall geeignet und ausgebildet sind.

Die Montage einer Hubstütze an einer gemeinsamen Verbindungsstelle von mehreren Fahrgestellteilen hat den Vorteil, dass die vorhandene Versteifung der Verbindungsstelle zusätzlich für die Hubstütze genutzt werden kann. Die Verbindungsstelle kann für die Hubstütze und die Fahrgestellteile gemeinsam sein. Hierbei werden auch gemeinsame Verbindungsmittel, insbesondere Verschraubungen genutzt. An diesen Stellen kann außerdem eine definierte Schnittstelle vorhanden sein, die nur einen vom Fahrzeughersteller autorisierten und mit der Fahrzeugzulassung vereinbarbaren Stützenanbau erlaubt. Die Krafteinleitung kann durch verformte und formschlüssig ineinander greifende Verbindungselemente zusätzlich stabilisiert werden.

Solche gemeinsamen Verbindungsstellen von Fahrgestellteilen und Hubstütze versteifen außerdem die Fahrgestellteile und ermöglichen deren Optimierung. Zudem bieten die Verbindungsstellen, besonders günstige Montagestellen, die ggf. auch eine besonders vorteilhafte große Montagehöhe ermöglichen, insbesondere unter Einbeziehung eines aufrechten Adapters zum Höhenausgleich. Hierdurch können Biegemomente am Fahrgestell besser eingeleitet und aufgenommen werden.

Besonders günstige Verbindungsstellen zwischen Fahrgestellteilen befinden sich zwischen Längsträgern des Fahrgestells und einer Heckverlängerung und/oder zwischen den besagten Längsträgern und einem Achsbock. Die Verbindungsstelle zu einer Heckverlängerung ermöglicht eine besonders lastgünstige Position einer Hubstütze, mit der besonders auch Zusatzlasten im Heckbereich optimal aufgenommen und abgestützt werden können.

Die Anordnung einer Hubstütze an einer Einstiegsstelle zu einer Fahrerkabine hat den Vorteil, dass die benachbarte und vorzugsweise von einem Frontantrieb angetriebene vordere Achse direkt entlastet werden kann. Diese Montagestelle hat außerdem wenig Störpotenzial und bietet eine gute und stabile Abstützmöglichkeit, insbesondere an einem axialen Unterzug eines vorderen Fahrgestellteils, insbesondere eines Zugkopfchassis.

Ferner ist es günstig, die Hubstütze unter der Einstiegstelle und mit Versatz gegenüber der Fahrzeugaußenseite anzuordnen, so dass der Einstieg nicht behindert wird. Durch eine an der Einstiegstelle befindliche Stufe kann die Steifigkeit des Fahrgestells und die Krafteinleitungsmöglichkeit der Hubstütze zusätzlich verbessert werden. In Verbindung mit heckseitigen Hubstützen ergibt sich außerdem der Vorteil einer größeren Stützlänge der Hubstützenanordnung.

Die andere Variante mit der Montage von einer oder mehreren Hubstützen in der Nähe der hinteren Achsanordnung hat den Vorteil, dass die Achse und deren Federung von den ausgefahrenen Hubstützen besonders gut und sicher entlastet werden können. Dies ist auch eine schwerpunktsnahe Position, die eine besonders gute Lastaufnahme durch die Hubstütze(n) ermöglicht. Andererseits bietet der Achsbockbereich eine besonders steife Verbindungsstelle, bei der auch hohe Stützkräfte und Stützmomente eingeleitet und aufgenommen werden können. Zudem kann eine Hubstütze störungsarm und vor allem auch an der Innenseite des Fahrgestells angeordnet werden.

In einer anderen Variante kann eine Hubstütze an einer Stegöffnung eines aufrechten Mittelstegs eines Längsträgers mittels einer Klemmeinrichtung montiert werden. Dies vermeidet eine zusätzliche und schwächende Einbringung von Bohrungen am besagten Mittelsteg. Andererseits bietet diese Anbautechnik unterschiedliche und flexible Montagemöglichkeiten von Hubstützen am Fahrgestell. Mittels Durchgriff an der Stegöffnung und durch Einsatz von Klemmplatten kann außerdem eine sehr gute Abstützung der Kräfte und Momente im Bereich von Obergurt und/oder Untergurt des Längsträgers erreicht werden. Dies ist belastungstechnisch günstiger als das vorbekannte Anschrauben mit Bohrlöchern im Zentralbereich eines solchen Mittelstegs.

In einer weiteren Variante kann eine Hubstütze im Bereich von einer Aufnahmestelle für einen Wagenheber am Fahrgestell angeordnet sein. Hier ist das Fahrgestell ohnehin verstärkt und bietet eine hinreichend stabile Montagestelle für eine Hubstütze. Eine solche Wagenheberaufnahme kann z.B. an einem vorderen Fahrgestellteil, insbesondere einem Zugkopfchassis, angeordnet sein. Die Montagestelle kann auch von außen zugänglich sein.

Die vorgenannten Montagetechniken für Hubstützen an einer gemeinsamen Verbindungsstelle von Fahrgestellteilen, an der Einstiegstelle, an einer Stegöffnung und an einer Wagenheberaufnahme haben jeweils eigenständige erfinderische Bedeutung. Sie können jeweils einzeln für sich oder in beliebiger Kombination eingesetzt werden. Besonders günstig ist die Kombination einer vorderen Anordnung von beidseitigen Hubstützen an den frontseitigen Einstiegstellen und einer hinteren Anordnung von beidseitigen Hubstützen im hinteren Achsbereich oder an der Verbindungsstelle zu einer Heckverlängerung oder einem anderen Heckteil.

Die konstruktive Ausbildung der Hubstützen und insbesondere ihrer ausfahrbaren Stützeinheit ist beliebig wählbar. Die Hubstützen können eine Stelleinrichtung zur Bewegung, insbesondere Verschwenkung, der Stützeinheit, zwischen einer zurückgezogenen Ruhestellung und einer Stützstellung aufweisen. Die Stelleinrichtung ist nicht notwendig und kann auch entfallen.

Die Stützeinheit und die ggf. vorhandene Stelleinrichtung können von einem Motor oder einem Zylinder angetrieben sein. Hydraulische Hubstützen sind bevorzugt autonom ausgebildet und weisen eine hydraulische Versorgungseinheit auf, die räumlich getrennt und mit Distanz vom Zylinder der Stützeinheit angeordnet sowie eigenständig am Fahrgestell montierbar ist. Die hydraulische Versorgungseinheit und der hydraulische Zylinder sind durch schlauchförmige und biegbare hydraulische Leitungen miteinander verbunden. Der Zylinder ist mehrstufig teleskopierbar und hat einen beidseitig beaufschlagten Kolben. Die hydraulische Versorgungseinheit weist eine Pumpenanordnung, einen geschlossenen Tank für Hydraulikflüssigkeit, Leitungsanschlüsse für hydraulische Leitungen und eine Steueranordnung auf, die mit der zentralen Steuerung steuertechnisch verbunden ist. Die hydraulische Hubstütze hat einen geschlossenen Hydraulikkreis zwischen Zylinder und hydraulischer Versorgungseinheit. Die autonomen hydraulische Hubstützen bilden eine dezentrale hydraulische Hubstützenanordnung.

Die Stützeinheit und die ggf. vorhandene Stelleinrichtung können bedarfsweise fernsteuerbar sein. Dies ist besonders günstig in Verbindung mit Hubstützen, die von der Fahrzeugaußenseite zurückversetzt und an der Innenseite oder am Innenbereich des Fahrgestells angeordnet sind, insbesondere an der Einstiegstelle oder im hinteren Achsbereich. Diese Stellen sind von außen manuell schlecht zugänglich. Im hinteren Achsbereich kann außerdem eine besonders vorteilhafte und kompakte Konzentration von Fahrzeugteilen erreicht werden. Trotz Anordnung von Hubstützen ist es möglich, in diesem Bereich platzsparend zu bauen und an der bevorzugten Radlenkerachse auch die außenseitigen Schwinghebel nebst Federung und eventuellen Zusatzkomponenten, wie Niveauregulierung, Luftfederung etc. unterzubringen. Deren Eigengewichte können durch die Hubstützen unter Vermeidung größerer Biegemomente auf das Fahrgestell direkt aufgenommen werden.

Die Hubstützen können für die vorgenannten Montagemöglichkeiten besonders adaptiert sein. Sie können insbesondere einen gestell- oder gehäuseartigen Träger für die Stützeinheit und ggf. die Stelleinrichtung aufweisen, der mittels eines integrierten oder zusätzlichen Anbaubeschlags optimal am Fahrgestell angebaut werden kann. Der Anbaubeschlag ermöglicht eine Optimierung der Montage und Befestigung. Er kann besonders an die besagte gemeinsame Verbindungsstelle mit mehreren Fahrgestellteilen angepasst sein. Ein Anbaubeschlag kann auch an die Einstiegstelle angepasst sein. Der Anbaubeschlag kann auch eine Klemmeinrichtung zur Montage an einer Stegöffnung aufweisen. Er kann insbesondere Klemmplatten mit gegenseitiger Verbindung zur besonders günstigen Befestigung an einer Stegöffnung aufweisen. Ein Zylinder kann mit seinem gehäuseartigen Träger nebst Anbaubeschlag starr am Fahrgestell montiert sein.

In den Unteransprüchen sind weitere vorteilhafte Ausgestaltungen der Erfindung angegeben.

Weitere Ausgestaltungen des erfindungsgemäßen Fahrgestells und des motorisierten Straßenfahrzeugs sowie der Hubstützenanordnung können folgende Merkmale einzeln und in beliebiger Kombination aufweisen.

Eine Hubstütze an einer Einstiegstelle zu einer Fahrerkabine kann an einem bevorzugt axialen Unterzug eines vorderen Fahrgestellteils angeordnet sein.

Die Hubstützenanordnung kann eine oder mehrere Hubstützen umfassen, die an einer Stegöffnung an einem aufrechten Trägersteg eines Längsträgers des Fahrgestells montiert ist/sind.

Die Hubstützenanordnung kann eine oder mehrere Hubstütze umfassen, die im Bereich von einer Wagenheberaufnahme angeordnet ist/sind.

Die verschiedenen Hubstütze(n) können jeweils in Fahrtrichtung beidseitig am Fahrgestell angeordnet sein. Bevorzugt umfasst die Hubstützenanordnung vier Hubstützen.

Ein motorisierte Zugkopf des Fahrgestells oder des Straßenfahrzeugs kann ein Zugkopfchassis aufweisen, das mit dem höhenversetzten Anbauchassis über einen Adapter verbunden ist.

Das Straßenfahrzeug kann einen Aufbau, insbesondere einen Wohnmobilaufbau oder einen Verkaufs- oder Präsentationsmobilaufbau, aufweisen.

Die Erfindung ist in den Zeichnungen beispielhaft und schematisch dargestellt. Im Einzelnen zeigen:
- Figur 1:: ein motorisiertes Straßenfahrzeug mit einem Fahrgestell und einer Hubstützenanordnung mit mehreren Montagemöglichkeiten für Hubstützen in einer schematischen Seitenansicht,
- Figur 2:: eine perspektivische Draufsicht auf ein Fahrgestellt mit einer vorderen und hinteren Achsanordnung sowie einer Hubstützenanordnung mit mehreren potenziellen Montagemöglichkeiten für Hubstützen,
- Figur 3:: eine Draufsicht auf die Anordnung von Figur 2,
- Figur 4:: eine perspektivische Unteransicht der Anordnung von Figur 2 und 3,
- Figur 5:: eine abgebrochene perspektivische Ansicht einer Verbindungsstelle von Längsträgern mit einer abgesenkten Heckverlängerung und dort montierten Hubstützen,
- Figur 6:: eine abgebrochene perspektivische Darstellung eines Fahrgestells mit an Stegöffnungen montierten Hubstützen,
- Figur 7 und 8:: verschiedene perspektivische und abgebrochene Ansichten eines Fahrgestells mit Anordnung einer Hubstütze im hinteren Achsbereich an einer Verbindungsstelle zwischen Achsbock und Längsträger,
- Figur 9 bis 12:: verschiedene Ansichten eines Fahrgestells mit einer Anordnung von Hubstützen an einer Verbindungsstelle zwischen Längsträgern und einer abgesenkten Heckverlängerung in Variation zu Figur 5 und
- Figur 13:: eine andere Variante eines Fahrgestells und einer Hubstützenanordnung.

Die Erfindung betrifft ein Fahrgestell (2) für ein motorisiertes Straßenfahrzeug (1) mit einer Hubstützenanordnung (3) und ein damit ausgerüstetes motorisiertes Straßenfahrzeug (1).

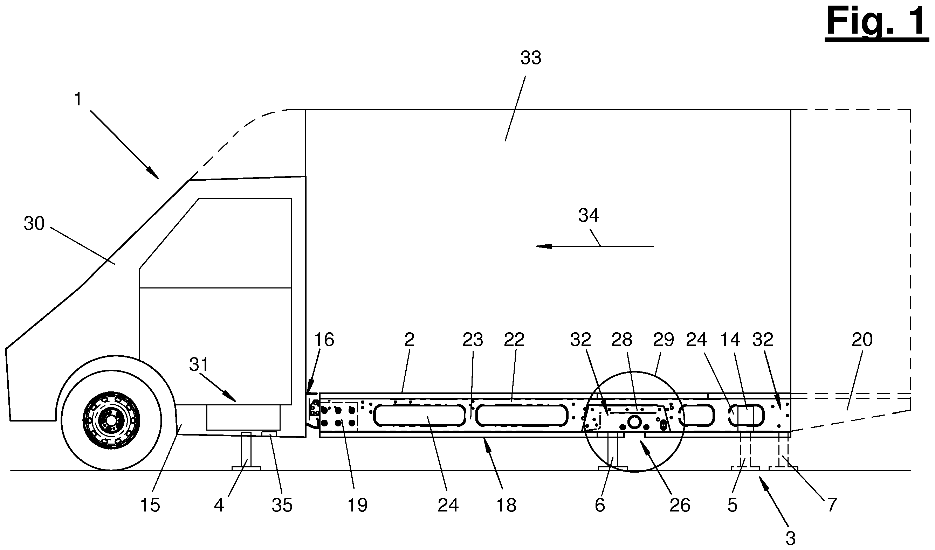

Figur 1 zeigt schematisch ein motorisiertes Fahrzeug (1) mit einem Fahrgestell (2) und einer Hubstützenanordnung (3). Das Fahrzeug (1) ist ein Straßenfahrzeug und weist einen vorzugsweise frontseitig angeordneten Fahrantrieb mit einem Motor nebst Getriebe und einer angetriebenen, vorzugsweise vorderen Achse auf. Das Straßenfahrzeug (1) besitzt einen Aufbau (33) und eine frontseitige Fahrkabine (30), die in den Aufbau (33) integriert oder separat angeordnet sein kann. An der Fahrerkabine (30) befindet sich eine Einstiegstelle (31). Hier kann eine Trittstufe angeordnet sein. Die vorbezeichneten Richtungsangaben für vorne und hinten beziehen sich jeweils auf die durch Pfeil (34) angegebene Fahrtrichtung bzw. Fahrzeuglängsachse.

Das Fahrgestell (2), dass auch als Chassis bezeichnet wird, kann als ein einheitliches und über die Fahrzeuglänge durchgehendes Fahrgestell ausgebildet sein. In der gezeigten und bevorzugten Anordnung ist das Fahrgestell (2) unterteilt. Es kann aus einem frontseitigen Zugkopf (15) mit einem eigenen Zugkopfchassis (16) und aus einem Anbauchassis (18) bestehen, die ggf. von unterschiedlichen Herstellern stammen. Das Zugkopfchassis (15) weist den Fahrantrieb mit Motor und Getriebe, eine Lenkeinrichtung und eine frontgetriebene Vorderachse auf. Das Zugkopfchassis (16) kann mit dem Anbauchassis (18) über einen Adapter (19) verbunden sein, der ggf. einen Höhenunterschied gegenüber dem bevorzugt tiefer gelegten Anbauchassis (18) ausgleicht. Das Anbauchassis (18) weist eine hintere Achsanordnung (26) auf, die in der gezeigten Ausführungsform nicht angetrieben ist und als Schleppachse ausgebildet ist. Alternativ kann das Straßenfahrzeug (1) einen Heckantrieb mit einer angetriebenen hinteren Achsanordnung aufweisen. Hierfür eignet sich z.B. ein über die Fahrzeuglänge durchgehendes Fahrgestell.

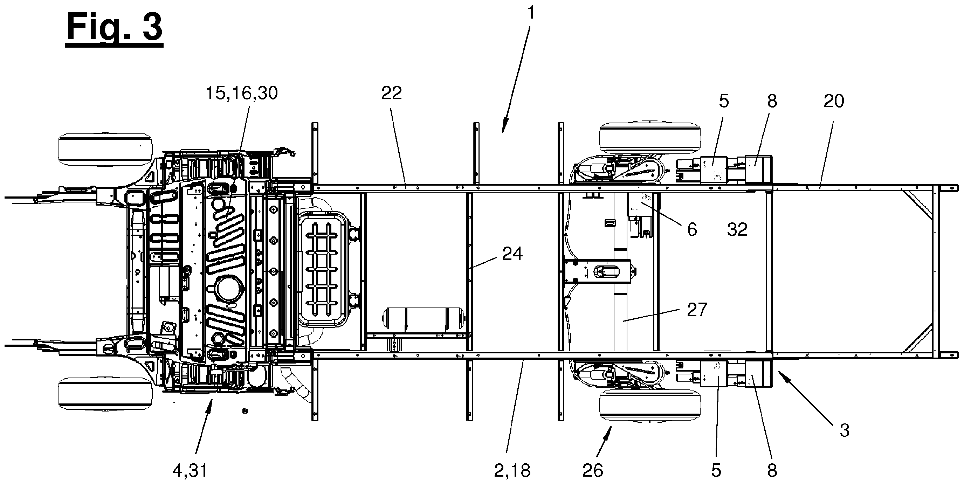

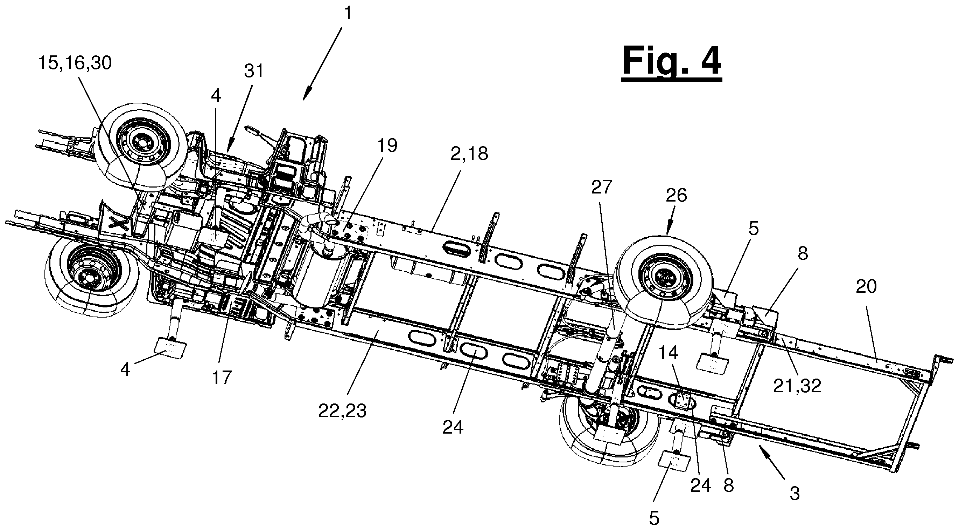

Die Achsanordnung (26) kann eine oder mehrere Achsen aufweisen. Diese sind vorzugsweise als Radlenkerachsen ausgebildet und weisen jeweils einen massiven oder bevorzugt rohrförmigen Achskörper (27) mit endseitigen gelenkig gelagerten Radlenkern bzw. Schwinghebeln und daran drehbar gelagerten Rädern (29) auf. Die Radlenkerachse kann z.B. wie in den gezeigten Ausführungsbeispielen als Längslenkerachse oder in anderer Ausführung als Schräglenkerachse ausgebildet sein. Die Achsanordnung (26) kann ferner eine Federung aufweisen. Dies kann eine in die Achse integrierte Gummi- oder Drehstabfederung oder eine externe Federung, z.B. die in den Figuren 1 bis 8 gezeigte Luftfederung sein. Ferner sind Stoßdämpfer für die Radlenker bzw. deren Schwinghebel vorhanden. Das Straßenfahrzeug (1) weist außerdem eine Betriebs- und Feststellbremse auf.

Am Fahrgestell (2) können eine oder mehrere vorbereitete Wagenheberaufnahmen (35) angeordnet sein, an denen ein bodenseitig abgestützter Wagenheber zum Anheben des Fahrzeugs (1) angesetzt und formschlüssig in Eingriff gebracht werden kann. In Figur 1 ist eine solche z.B. schalenförmige Wagenheberaufnahmen (35) im Frontbereich des Fahrgestells (2) schematisch angedeutet. Sie befindet sich z.B. unter der Fahrerkabine (30). Eine oder mehrere Wagenheberaufnahmen (35) können auch an anderen Stellen des Chassis (2) angeordnet sein. Zudem kann eine Halterung zum Mitführen des unbenutzten Wagenhebers am Fahrzeug (1) angeordnet sein.

Das Fahrgestell (2) kann sich in mehrere Fahrgestellteile (16,20,22) unterteilen. Dies können z.B. das frontseitige Zugkopfchassis (16) oder bei einer einteiligen Chassisausführung der vordere Fahrgestellteil (16) sowie ein hinterer und hinter der Achsanordnung (26) angeordneter Fahrgestellteil (20), z.B. eine sogenannte Heckverlängerung, sein. Ein dazwischen angeordneter Fahrgestellteil (22) kann von Längsträgern gebildet werden. Ein weiteres Fahrgestellteil (28) kann von einem Achsbock der hinteren Achsanordnung (26) gebildet werden.

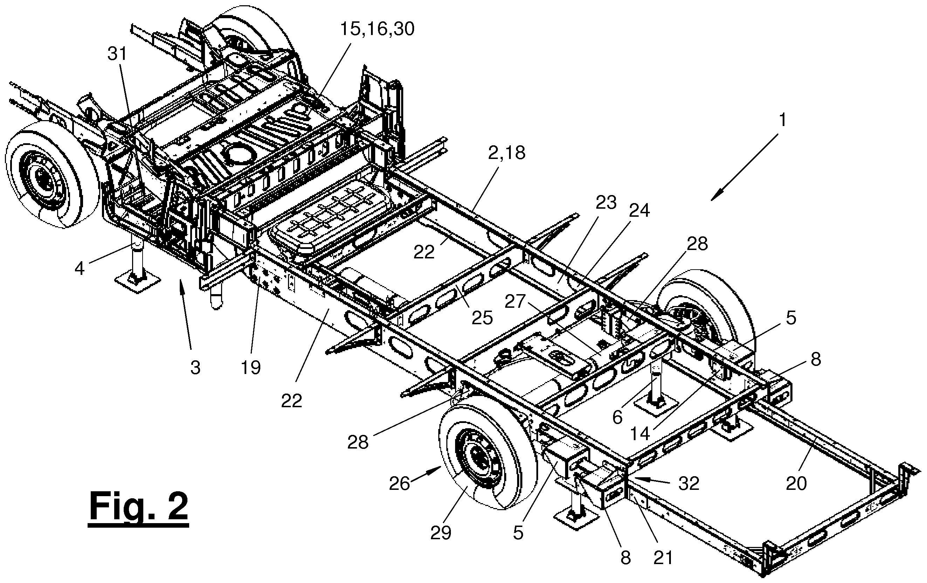

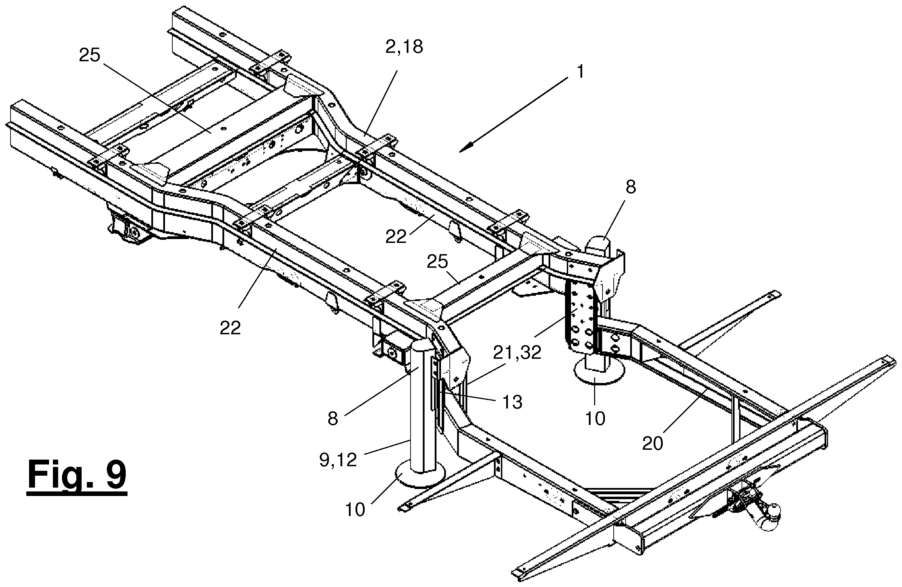

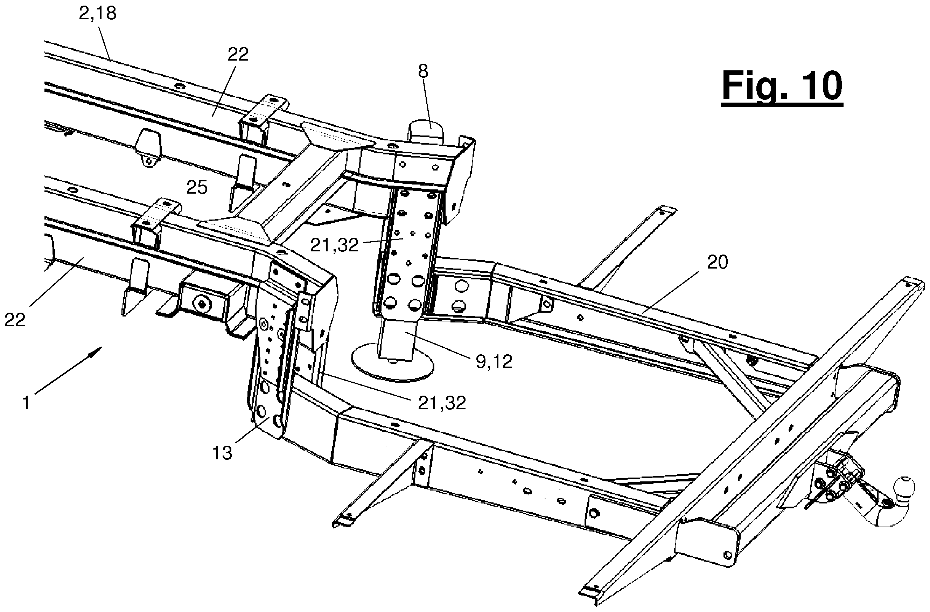

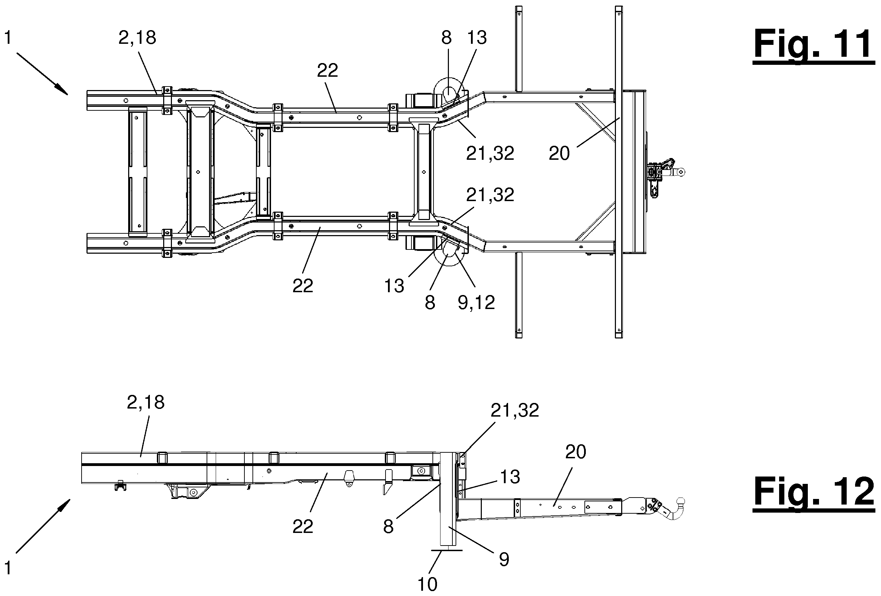

Die Längsträger (22) können z.B. gemäß Figur 2 bis 8 parallel angeordnet sein und eine gerade Erstreckung aufweisen. Figur 9 bis 11 zeigen eine Variante mit gebogenen Längsträgern (22). Die Längsträger (22) können in der ersten Variante von Figur 2 bis 8 als dünnwandige und abgekantete Metallprofile ausgebildet sein, die z.B. einen aufrechten Mittelsteg (23) und einen unten und/oder oben anschließenden Quergurt aufweisen. Im Mittelsteg (23) können ein mehrere Stegöffnungen (24) zur Gewichtsersparnis angeordnet sein. Sie können länglich ausgebildet und entlang der Fahrtrichtung (34) ausgerichtet sein. In den gezeigten Ausführungsformen ist der jeweilige Längsträger (22) im Querschnitt als C-Profil ausgebildet. Alternativ sind andere Profilformen, z.B. L- oder Z-Profile, möglich. In der Variante von Figur 9 bis 11 sind die Längsträger (22) als Hohlprofile, z.B. aufeinander gesetzte und längs miteinander verbundene Hutprofile, ausgebildet.

Die Längsträger (22) können durch ein oder mehrere Querträger (25) quer verbunden sein. Hierdurch kann ein Trägerrahmen, insbesondere ein Leiterrahmen, gebildet werden. Die Querträger (25) sind ebenfalls als Metallprofile ausgebildet. Die Längs- und Querträger (22,25) können z.B. aus Stahl oder einer Leichtmetalllegierung bestehen.

Das Fahrgestell (2) weist eine Hubstützenanordnung (3) auf, mit der das Fahrgestell (2) und das Fahrzeug (1) im Stand abgestützt und ggf. angehoben werden können, wobei die Räder (29) und die Achsen bzw. deren Federungen entlastet werden können. Die Hubstützenanordnung (3) kann eine oder mehrere Hubstützen (4,5,6,7,8,) aufweisen.

In Figur 1 bis 3 sind verschiedene Ausführungsbeispiele mit einer Vielzahl unterschiedlicher Anbaumöglichkeiten für Hubstützen (4,5,6,7,8) als beispielhafter Überblick dargestellt. Die Hubstützen (4,5,6,7,8) sind vorzugsweise in Fahrtrichtung (34) beidseits am Fahrgestell (2) angeordnet und bilden ein Hubstützenpaar. Vorzugsweise weist die Hubstützenanordnung (3) zwei solcher Paare auf, die im Front- und Heckbereich des Fahrgestells (2) angeordnet sind. Die Zahl der Paare kann alternativ größer sein.

Die Hubstützenanordnung (3) umfasst z.B. eine vordere und bevorzugt paarweise beidseits angeordnete Hubstütze (4), die an der Einstiegsstelle (31) zu einer Fahrerkabine (30) angeordnet ist. Sie stützt den vorderen Fahrzeugbereich ab. Die Hubstütze (4) ist vorzugsweise von der Fahrzeugaußenseite quer zur Fahrtrichtung (34) nach innen zurückversetzt und befindet sich unter der Einstiegsstelle (30). Vorzugsweise ist sie unter der Trittstufe an der Einstiegsstelle (30) angeordnet. Die Hubstütze (4) kann an einem axialen Unterzug (17) des vorderen Fahrgestellteils (16) angeordnet sein. Dieser Unterzug (17) kann z.B. von einem Längsträger und/oder einem Querträger des vorderen Fahrgestellteils (16) bzw. Zugkopfchassis gebildet werden. Die Hubstützenanordnung (3) kann alternativ oder zusätzlich eine Hubstütze (6,7,8) umfassen, die an einer gemeinsamen Verbindungsstelle (32) von mehreren Fahrgestellteilen (20,22,28) montiert ist. Die gemeinsame Verbindungsstelle (32) verbindet die Hubstütze (6,7,8) mit diesen Fahrgestellteilen (20,22,28) und letztere untereinander. Für die Ausgestaltung dieser Anordnung gibt es verschiedene Möglichkeiten.

Die Hubstützen (6,7,8) und die Fahrgestellteile (22,28) benutzen gemeinsame Verbindungselemente, z.B. Schrauben, Nieten oder dgl.. An der gemeinsamen Verbindungsstelle (32) kann außerdem eine herstellerseitig definierte Schnittstelle vorhanden sein. Die Krafteinleitung kann durch verformte und formschlüssig ineinander greifende Verbindungselemente, z.B. Napfverschraubungen, Bördelkrägen mit Eingriff in Schrauböffnungen oder dgl. zusätzlich stabilisiert werden.

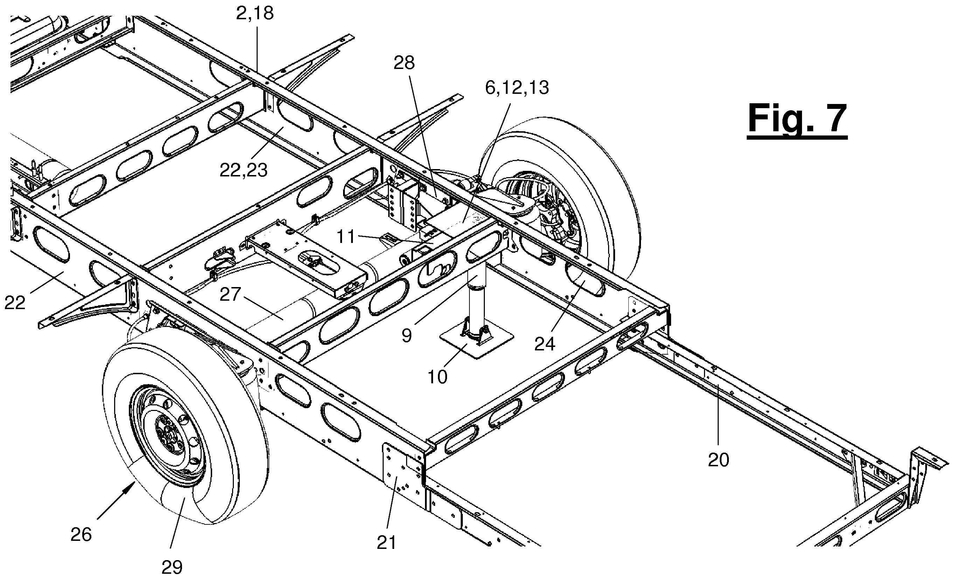

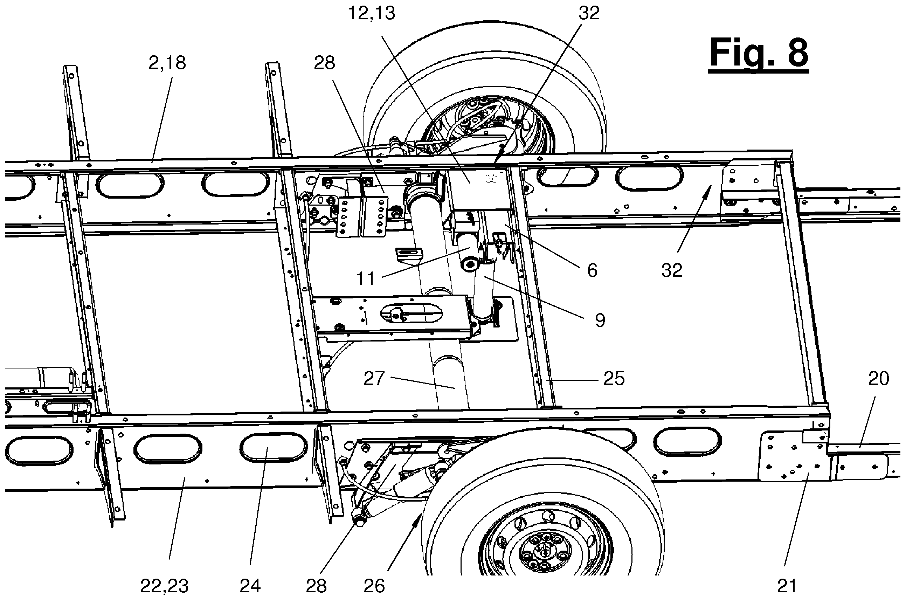

Gemäß Figur 1 bis 3, 7 und 8 ist z.B. eine Hubstütze (6) an einer gemeinsamen Verbindungsstelle (32) von einem Achsträger (22) und einem Achsbock (28) der hinteren Achsanordnung (26) montiert. An der Verbindungsstelle (32) liegen die aufrechte Stütz- und Anbauplatte des Achsbocks (28) und der Trägersteg (23) aneinander und verstärken an der Verbindungsstelle (32) das Fahrgestell (2). Die Hubstütze (6) kann im inneren Fahrgestellbereich, insbesondere an der Innenseite der Längsträger (22) bzw. Achsbocks (28), angeordnet sein. Sie kann sich in unmittelbarer Nachbarschaft zum Achskörper (27), insbesondere hinter dem Achskörper (27), und ggf. vor einem Querträger (25) befinden. Die Hubstütze (6) kann in die Profilöffnung des jeweiligen z.B. C-förmigen Längsträgers (22) eingreifen und direkt am Trägersteg (23) oder an einem ggf. davor liegenden Teil des Achsbocks (28) befestigt sein. Alternativ kann eine Montagemöglichkeit an einem vom Achsbock (28) quer abstehenden und in Figur 7 und 8 dargestellten Montageflansch gegeben sein. In den Zeichnungen ist der Übersicht halber die Hubstütze (6) nur an einer Fahrzeugseite dargestellt.

In einer anderen Variante gemäß Figur 1 kann eine Hubstütze (7) an einer gemeinsamen Verbindungsstelle (32) von einem Längsträger (22) und einer Heckverlängerung (20) montiert sein. Der Längsträger (22) und ein Längsträger der Heckverlängerung (20) können hierbei direkt miteinander verbunden sein, z.B. in gegenseitiger Überlappung, wobei an dieser Verbindungsstelle (32) auch die Hubstütze (7) montiert werden kann. Die besagten Längsträger liegen dabei im Wesentlichen auf gleicher Höhe.

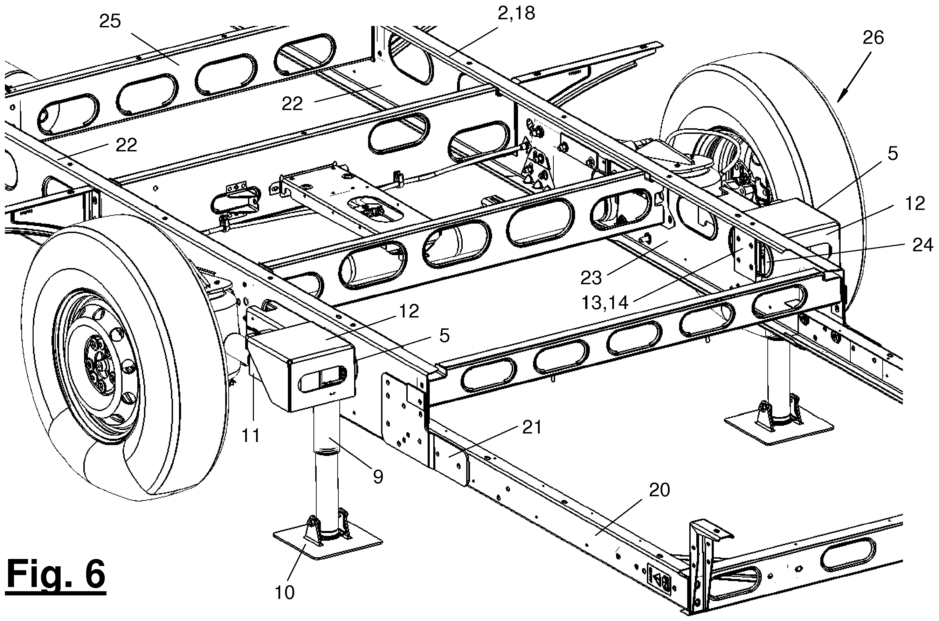

Figur 2 bis 4 und Figur 5 zeigen eine Variante hierzu mit der Montage einer Hubstütze (8) an einer gemeinsamen Verbindungsstelle von einem Längsträger (22) und einer zu diesem höhenversetzten Heckverlängerung (20). Zwischen diesen Fahrgestellteilen (20,22) ist ein den Höhenversatz ausgleichender Adapter (21) angeordnet, der sich an der Verbindungsstelle (32) befindet und an dem auch die Hubstütze (8) montiert werden kann. Die bevorzugt beidseits angeordneten Hubstützen (8) sind vorzugsweise an der Außenseite der Längsträger (22) und der Heckverlängerung (20) montiert. In Figur 6 und 7 ist der z.B. L-förmige Adapter (21) ohne Hubstütze ersichtlich.

Figur 9 bis 11 zeigen eine Variante der Hubstütze (8) mit einem stärkeren Höhenversatz zwischen den Längsträgern (22) und der abgesenkten Heckverlängerung (20) und mit einem vertikal ausgerichteten und den Höhenversatz ausgleichenden Adapter (21). Der plattenförmige aufrechte Adapter (21) hat in diesem Fall eine größere Länge bzw. Höhe und bietet eine größere Montagefläche und -höhe für die Hubstütze (8). Der Adapter (21) kann an einer schrägen Übergangs- und Verbindungsstelle (23) zwischen den in diesem Bereich eingezogenen und eng benachbarten Längsträgern (22) und einer verbreiterten Heckverlängerung (20) angeordnet sein. Der Adapter (21) kann dabei schräg zur Fahrtrichtung (34) und mit Ausrichtung nach außen angeordnet sein. Im eingezogenen Längsträgerbereich kann die nicht dargestellte hintere Achsanordnung platzsparend aufgenommen werden, wobei die Längsträger (22) anschließend in Richtung nach vorn wieder seitlich ausbauchen und sich weiter voneinander entfernen.

In einer weiteren alternativen oder zusätzlichen Variante kann die Hubstützenanordnung (3) eine Hubstütze (5) umfassen, die an einer Stegöffnung (24) am aufrechten Trägersteg (23) eines Längsträgers (22) montiert ist. Diese Variante ist in Figur 1 bis 4 und 6 dargestellt. Der bevorzugte Montageort ist eine Stegöffnung (24) im Heckbereich und in der Nähe der hinteren Achsanordnung (26). Die Montagestelle kann z.B. vor einer Verbindungsstelle (32) zu einem hinteren Heckteil (20) oder einer Heckverlängerung liegen. Alternativ kann eine solche Hubstütze (5) auch an einer Stegöffnung (24) im vorderen Bereich der Längsträger (22) montiert sein. Sie kann in einem solchen Fall die Hubstütze (4) an der Einstiegsstelle (31) gegebenenfalls ersetzen.

Vorzugsweise weist die Hubstützenanordnung (3) eine vordere Anordnung von einem Paar Hubstützen (4) an der Einstiegsstelle (31) und eine hintere Anordnung von einem Paar einer der Hubstützen (5,6,7,8) auf.

Die gezeigten Hubstützen (4,5,6,7,8) können konstruktiv gleich oder unterschiedlich ausgebildet sein. Sie weisen jeweils eine ausfahrbare Stützeinheit (9) mit einem Träger (12) und einem dort integrierten oder separaten Anbaubeschlag (13) zur Montage am Fahrgestell (2) auf.

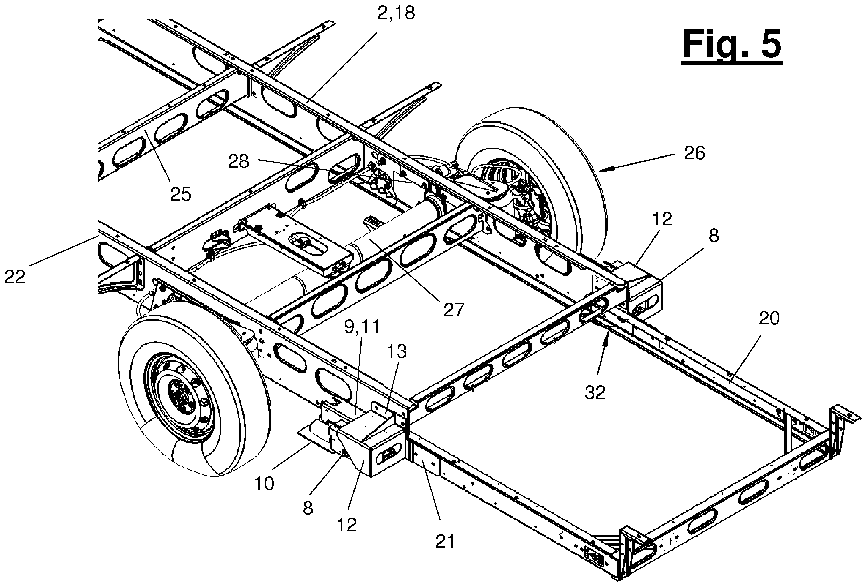

Die Hubstütze (4,5,6,7,8) kann außerdem eine Stelleinrichtung (11) zum Bewegen, insbesondere Verschwenken, der Stützeinheit (9) zwischen einer zurückgezogenen Ruhestellung und einer Stützstellung aufweisen. In den Zeichnungen ist z.B. die Hubstütze (8) gemäß Figur 5 in eingeschwenkter Ruhestellung dargestellt. Die Stützeinheiten (9) der anderen Hubstützen (4,5,6,7) sind in ausgeschwenkter Stützstellung dargestellt.

Bei der Variante von Figur 9 bis 11 und auch in anderen Ausführungsformen kann eine Stelleinrichtung (11) entbehrlich sein. Die Stützeinheit (9) führt dabei nur vertikale Aus- und Einfahrbewegungen zum Heben und Senken aus.

Die bevorzugt teleskopierbare Stützeinheit (9) kann eine Ausfahrmechanik, z.B. einen Spindel- oder Zahnstangentrieb, mit Arretiermöglichkeit und am unteren Ende einen gelenkig gelagerten Stützteller (10) oder ein anderes Mittel zur Abstützung am Untergrund aufweisen. Die Stützeinheit und ggf. die Stelleinrichtung (11) können manuell bedienbar sein und können z.B. durch eine Kurbel von außen betätigt werden.

In den gezeigten und bevorzugten Ausführungsformen weisen die Stützeinheit (9) und ggf. die Stelleinrichtung (11) einen Antrieb auf, der einen Motor, einen Zylinder oder ein sonstiges Antriebsmittel und eine in der gewünschten Ausfahrstellung arretierbare Ausfahrmechanik beinhalten kann. Die Stützeinheit (9) und ggf. die Stelleinrichtung (11) können fernsteuerbar sein und können eine geeignete drahtgebundene oder drahtlose Kommunikationseinrichtung, ggf. in Verbindung mit einer fahrzeugfesten und/oder mobilen Fernbedienungseinheit, aufweisen. Dies ist vor allem für von außen schwer zugängliche und im Fahrgestell (2) verborgen montierte Hubstützen (4,6) von Vorteil.

Der Träger (12) kann in den verschiedenen Ausführungsbeispielen jeweils als kastenförmiges Gestell oder Gehäuse ausgebildet sein, welches die Stützeinheit (9) und ggf. die Stelleinrichtung (11) aufnehmen und schützend umgeben kann. Der Träger (12) kann nach unten und in Längsrichtung (34) offen sein. Er kann als dünnwandiges Blechteil ausgeführt sein. Bei der Variante von Figur 9 bis 11 kann der Träger als aufrechtes, rohrförmiges Gehäuse der Stützeinheit (9) ausgebildet sein.

Der Träger (12) und der Anbaubeschlag (13) können an eine bauliche Montageumgebung, insbesondere den Einbauraum, an einer Einstiegstelle (31) oder einer Wagenheberaufnahme (35) angepasst sein. Der Träger (12) kann hierfür eine entsprechende Formgebung und Abmessung haben. Der Träger (12) kann variabel und/oder austauschbar sein. Hierdurch kann eine Anpassung einer Hubstütze (4,5,6,7,8) an unterschiedliche Montagestellen erfolgen.

Der Anbaubeschlag (13) kann auch an eine gemeinsame Verbindungsstelle (32) von mehreren Fahrgestellteilen (20,22,28) adaptiert sein. Er kann hierfür z.B. ein an die Verbindungsstelle und an deren Schnittstelle bzw. Schraubbild angepasstes Lochbild aufweisen. Der Anbaubeschlag (13) wird mit den bereits an der Verbindungsstelle (32) vorhandenen Verbindungsmitteln, insbesondere Verschraubungen, montiert. Er kann zusätzlich eigene Verbindungsmittel, insbesondere Verschraubungen aufweisen.

Der Anbaubeschlag (13) kann auch eine Adapter (21) ergänzen und die Verbindungsstelle (32) stabilisieren. Figur 9 bis 11 zeigen eine solche Anordnung mit einem innenseitigen schlanken, aufrechten sowie plattenförmigen Adapter (21) und einem außenseitigen, parallelen und ähnlich geformten plattenförmigen Anbaubeschlag (13), die jeweils endseitig miteinander und mit den Enden des jeweiligen oberen Längsträgers (22) und des weit nach unten versetzten Längsträgers der Heckverlängerung (20) verbunden, insbesondere verschraubt sind. Der Adapter (21) und der Anbaubeschlag (13) bilden miteinander und mit den Trägerenden eine Stützkäfig.

Für die Montage an einer Stegöffnung (24) kann der Anbaubeschlag (13) entsprechend modifiziert sein und kann als Klemmeinrichtung (14) ausgebildet sein. Diese kann eine oder mehrere Klemmplatten aufweisen, die gemäß Figur 1 bis 4 und 5 die Trägeröffnung (24) nach oben und unten und ggf. seitlich übergreifen und in Anlage mit dem benachbarten Stegbereich kommen und sich hier abstützen. Die Klemmeinrichtung (14) kann z.B. zwei Klemmplatten aufweisen, die an der Innen- und Außenseite des Trägerstegs (23) parallel angeordnet und miteinander durch eine Spanneinrichtung verbunden sind.

Die Hubstützen (4,5,6,7,8), insbesondere deren angetriebene Stützeinheiten (9) und ggf. Stelleinrichtungen (11), können mit einer nicht dargestellten Steuerung verbunden sein. Sie können dadurch gesteuert und in gegenseitiger Abstimmung gemeinsam über eine Fernbedienung betätigt werden. Hierbei kann die Steuerung mit einer Sensorik versehen sein, mit der die Hubhöhe und ggf. die wagerechte Ausrichtung des angehobenen Fahrgestells (2) ermittelt und ggf. eingestellt bzw. geregelt werden kann. Hierüber kann eine automatische Nivellierung des Fahrgestells (2) und des Fahrzeugs (1) in der Hubstellung erreicht werden.

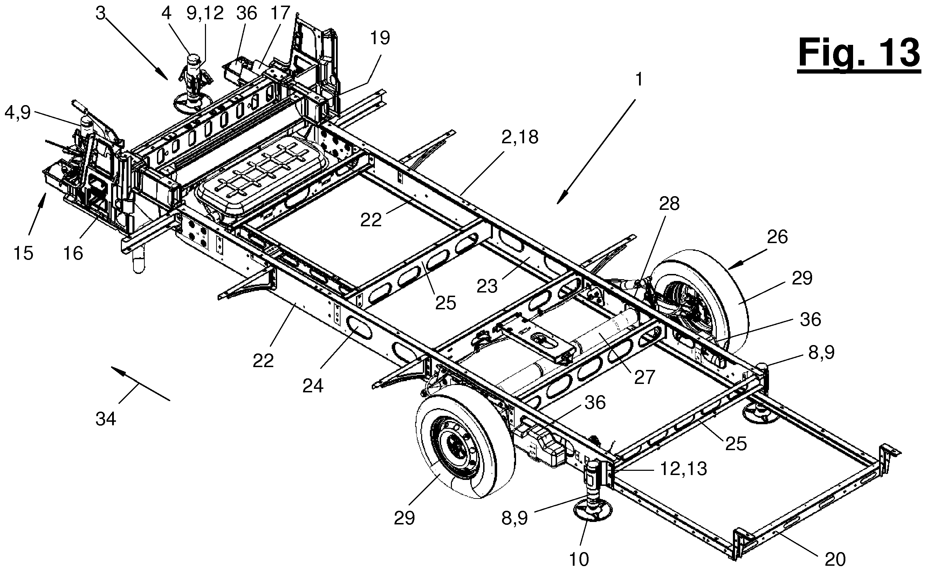

Figur 13 zeigt eine dezentrale hydraulische Hubstützenanordnung (3) mit beidseitigen Hubstützen (4) an der Einstiegstelle (31) der Fahrerkabine (30) und beidseitigen Hubstützen (8) an einer gemeinsamen Verbindungsstelle von einem Längsträger (22) und einer Heckverlängerung (20). Die Hubstützen (4,8) sind jeweils als autonome hydraulische Hubstützen ausgebildet und weisen eine teleskopierbare Stützeinheit (9) mit einem Zylinder mit einem als Gehäuse ausgebildeten Träger (12) sowie eine hydraulische Versorgungseinheit (36) auf. Die Hubstützen (4,8), insbesondere ihre hydraulischen Versorgungseinheiten (36), sind mit der besagten gemeinsamen Steuerung verbunden.

Die Heckverlängerung (20) kann einen Höhenversatz gegenüber dem Längsträger (22) aufweisen. Der in der Höhe reduzierte Längsträger der Heckverlängerung (20) kann am unteren Rand des Längsträger (22) anliegen. Zwischen diesen Fahrgestellteilen (20,22) ist ein den Höhenversatz ausgleichender, z.B. L-förmiger, Adapter (21) angeordnet, der sich an der Verbindungsstelle (32) befindet und an dem auch die Hubstütze (8) montiert werden kann. Die bevorzugt beidseits angeordneten Hubstützen (8), insbesondere deren Stützeinrichtungen (9), sind vorzugsweise an der Außenseite der Längsträger (22) und der Heckverlängerung (20) montiert. Sie können alternativ innenseitig montiert sein.

Die hydraulische Hubstütze (4,8) weist den Träger (12) und einen Montagebeschlag (13) für den hydraulischen Zylinder auf. Diese sind dazu ausgebildet, den hydraulischen Zylinder starr aufzunehmen und relativ ortsfest am Fahrgestell (2) zu fixieren. Die Hubstütze (4,8) führt z.B. nur eine lineare und axiale Einfahr- und Ausfahrbewegung aus. Der Träger (12) und der Montagebeschlag (13) sind lösbar miteinander verbunden.

Der Montagebeschlag (13) kann ausgetauscht und an unterschiedliche Anbaustellen am Fahrgestell (2) adaptiert werden. Der Träger (12) kann belassen werden.

Die hydraulischen Hubstützen (4,8) weisen jeweils die Stützeinheit (9) mit dem hydraulischen Zylinder und die zugeordnete eigene hydraulische Versorgungseinheit (36) auf, die als separate und mit gegenseitiger Distanz am am Fahrgestell (2) eigenständig montierbare Einheiten ausgestaltet sind. Der hydraulische Zylinder und die hydraulische Versorgungseinheit (36) sind durch schlauchförmige und flexible hydraulische Leitungen miteinander verbunden. Hierdurch wird ein geschlossener Hydraulikkreis gebildet.

Die hydraulische Versorgungseinheit (36) weist eine Pumpenanordnung, einen geschlossenen Tank mit Hydraulikflüssigkeit, vorzugsweise mit einer Lifetime-Füllung, eine Steueranordnung und Leitungsanschlüsse für die besagten hydraulischen schlauchartigen Leitungen auf. Die Pumpenanordnung ist beidseitig fördernd ausgebildet. Durch die beidseitige Beaufschlagung des Zylinders bzw. seiner Kolben und den geschlossenen Hydraulikkreis kann die Hubstütze (8) aktiv und gesteuert einfahren und ausfahren.

Die schlanke hydraulische Versorgungseinheit (36) wird bevorzugt mit liegender Ausrichtung am Fahrgestell (2) montiert. Die Montage erfolgt bei den hinteren Hubstützen (8) im Heckbereich an einem Längsträger (22) des Fahrgestells (2), wobei die Anbaulage innen oder außen am Längsträger (22) sein kann. Die Längsachse der hydraulischen Versorgungseinheit (36) ist bevorzugt parallel zur Längsachse des Fahrgestells (2) ausgerichtet. Die Stützeinheit (9) und die zugeordnete eigene hydraulische Versorgungseinheit (36) der vorderen Hubstütze (4) können an an unterschiedlichen Stellen des vorderen Fahrgestellteils (16), insbesondere eines dortigen längs oder quer gerichteten Unterzugs (17) erfolgen.

Abwandlungen der gezeigten und beschriebenen Ausführungsbeispiele sind in verschiedener Weise möglich. Insbesondere können die Merkmale der Ausführungsbeispiele und der genannten Varianten miteinander kombiniert und insbesondere auch vertauscht werden.

### BEZUGSZEICHENLISTE

- 1: Fahrzeug, Straßenfahrzeug
- 2: Fahrgestell, Chassis
- 3: Hubstützenanordnung
- 4: Hubstütze an Fahrerkabine
- 5: Hubstütze an Längsträger
- 6: Hubstütze an Achse
- 7: Hubstütze an Heckteil
- 8: Hubstütze an Heckteil
- 9: Stützeinheit
- 10: Stützteller
- 11: Stelleinrichtung
- 12: Träger
- 13: Anbaubeschlag
- 14: Klemmeinrichtung, Klemmplatte
- 15: Zugkopf
- 16: Fahrgestellteil vorn, Zugkopfchassis
- 17: Unterzug
- 18: Anbauchassis
- 19: Adapter
- 20: Fahrgestellteil hinten, Heckteil, Heckverlängerung
- 21: Adapter
- 22: Fahrgestellteil, Längsträger
- 23: Trägersteg
- 24: Stegöffnung
- 25: Querträger
- 26: Achsanordnung, Radlenkerachse
- 27: Achskörper, Achsrohr
- 28: Fahrgestellteil, Achsbock
- 29: Rad
- 30: Fahrerkabine
- 31: Einstiegstelle, Stufe
- 32: Verbindungsstelle
- 33: Aufbau
- 34: Fahrtrichtung, Fahrzeuglängsachse
- 35: Wagenheberaufnahme
- 36: hydraulische Versorgungseinheit

## Patentansprüche

1. Fahrgestell für motorisierte Straßenfahrzeuge (1), wobei das Fahrgestell (2) eine Hubstützenanordnung (3) mit einer oder mehreren Hubstützen aufweist, **dadurch gekennzeichnet, dass** die Hubstützenanordnung (3) eine Hubstütze (6,7,8) umfasst, die an einer gemeinsamen Verbindungsstelle (32) von mehreren Fahrgestellteilen (20,22,28) mittels gemeinsamer Verbindungsmittel, insbesondere Schrauben, Nieten oder dgl., montiert ist.

2. Fahrgestell nach Anspruch 1, **dadurch gekennzeichnet, dass** die Hubstützenanordnung (3) eine Hubstütze (4) umfasst, die von der Fahrzeugaußenseite zurückversetzt unter einer Einstiegstelle (31) zu einer Fahrerkabine (30) angeordnet ist.

3. Fahrgestell nach Anspruch 1 oder 2, **dadurch gekennzeichnet, dass** eine Hubstütze (6) an einer gemeinsamen Verbindungsstelle (32) von einem Längsträger (22) und einem Achsbock (28) einer hinteren Achsanordnung (26) montiert ist oder die Hubstütze (6) innenseitig am Längsträger (22) und neben einem Achskörper (27) einer hinteren Achsanordnung (26) montiert ist.

4. Fahrgestell nach Anspruch 1, 2 oder 3, **dadurch gekennzeichnet, dass** eine Hubstütze (7,8) an einer gemeinsamen Verbindungsstelle (32) von einem Längsträger (22) und einer Heckverlängerung (20) montiert ist.

5. Fahrgestell nach einem der vorhergehenden Ansprüche, **dadurch gekennzeichnet, dass** eine Hubstütze (8) an einem höhenausgleichenden Adapter (21) einer gemeinsamen Verbindungsstelle (32) von einem Längsträger (22) und einer höhenversetzten Heckverlängerung (20) montiert ist.

6. Fahrgestell nach einem der vorhergehenden Ansprüche, **dadurch gekennzeichnet, dass** das Fahrgestell (2) für einen Frontantrieb mit einer angetriebenen Vorderachse ausgelegt ist und eine antriebslose hintere Achsanordnung (26), insbesondere eine gefederte Radlenkerachse, aufweist.

7. Fahrgestell nach einem der vorhergehenden Ansprüche, **dadurch gekennzeichnet, dass** das Fahrgestell (2) einen frontseitigen motorisierten Zugkopf (15) und ein Anbauchassis (18) mit einer hinteren Achsanordnung (26) aufweist.

8. Fahrgestell nach einem der vorhergehenden Ansprüche, **dadurch gekennzeichnet, dass** die Hubstütze (4,5,6,7,8) eine bevorzugt teleskopierbare Stützeinheit (9) mit einem Träger (12), insbesondere einem kastenförmiges Gestell oder einem Gehäuse, und einem integrierten oder separaten Anbaubeschlag (13) zur Montage am Fahrgestell (2) aufweist.

9. Fahrgestell nach einem der vorhergehenden Ansprüche, **dadurch gekennzeichnet, dass** die Hubstütze (4,5,6,7,8) eine Stelleinrichtung (11) zum Bewegen, insbesondere Verschwenken, der Stützeinheit (9) zwischen einer zurückgezogenen Ruhestellung und einer Stützstellung aufweist.

10. Fahrgestell nach einem der vorhergehenden Ansprüche, **dadurch gekennzeichnet, dass** die ausfahrbare Stützeinheit (9) und ggf. die Stelleinrichtung (11) manuell oder durch einen Antrieb, insbesondere einen Motor oder einen Zylinder, betätigbar ist/sind.

11. Fahrgestell nach einem der vorhergehenden Ansprüche, **dadurch gekennzeichnet, dass** die Hubstütze (4,5,6,7,8) fernsteuerbar ist, wobei die die Stützeinheit (9) und ggf. die Stelleinrichtung (11) eine drahtgebundene oder drahtlose Kommunikationseinrichtung aufweisen.

12. Fahrgestell nach einem der vorhergehenden Ansprüche, **dadurch gekennzeichnet, dass** mehrere Hubstützen (4,5,6,7,8), insbesondere autonome hydraulische Hubstützen, mit einer Steuerung verbunden und gemeinsam betätigbar, insbesondere nivellierbar, sind.

13. Fahrgestell nach einem der vorhergehenden Ansprüche, **dadurch gekennzeichnet, dass** die Hubstützenanordnung (3) vier Hubstützen (4,5,6,7,8) umfasst, die in Fahrtrichtung (34) beidseitig am Fahrgestell (2) angeordnet sind.

14. Straßenfahrzeug mit einem Fahrantrieb, einem Fahrgestell (2) und einer Hubstützenanordnung (3) mit einer oder mehreren Hubstützen, **dadurch gekennzeichnet, dass** das Fahrgestell (2) nach mindestens einem der Ansprüche 1 bis 13 ausgebildet ist.

15. Straßenfahrzeug nach Anspruch 14, **dadurch gekennzeichnet, dass** ein motorisierte Zugkopf (15) des Straßenfahrzeugs (1) ein Zugkopfchassis (16) aufweist, das mit dem höhenversetzten Anbauchassis (18) über einen Adapter (19) verbunden ist.

## Claims

1. Chassis for motorized road vehicles (1), the chassis (2) having a lifting support arrangement (3) with one or more lifting supports, **characterized in that** the lifting support arrangement (3) comprises a lifting support (6, 7, 8) which is mounted at a common connecting point (32) of a plurality of chassis parts (20, 22, 28) by means of common connecting means, in particular screws, rivets or the like.

2. Chassis according to Claim 1, **characterized in that** the lifting support arrangement (3) comprises a lifting support (4) which, in a manner which is set back from the vehicle outer side, is arranged below an entry point (31) to a driver's cab (30).

3. Chassis according to Claim 1 or 2, **characterized in that** a lifting support (6) is mounted at a common connecting point (32) of a longitudinal carrier (22) and an axle block (28) of a rear axle arrangement (26), or the lifting support (6) is mounted on the inner side on the longitudinal carrier (22) and next to an axle beam (27) of a rear axle arrangement (26).

4. Chassis according to Claim 1, 2 or 3, **characterized in that** a lifting support (7, 8) is mounted at a common connecting point (32) of a longitudinal carrier (22) and a rear extension (20).

5. Chassis according to one of the preceding claims, **characterized in that** a lifting support (8) is mounted on a height-compensating adapter (21) of a common connecting point (32) of a longitudinal carrier (22) and a vertically offset rear extension (20).

6. Chassis according to one of the preceding claims, **characterized in that** the chassis (2) is designed for front wheel drive with a driven front axle, and has a non-driven rear axle arrangement (26), in particular a sprung wheel link axle.

7. Chassis according to one of the preceding claims, **characterized in that** the chassis (2) has a front-side motorized tractor head (15) and an attachable chassis (18) with a rear axle arrangement (26).

8. Chassis according to one of the preceding claims, **characterized in that** the lifting support (4, 5, 6, 7, 8) has a preferably telescoping supporting unit (9) with a carrier (12), in particular a box-shaped frame or a housing, and an integrated or separate attachable fitting (13) for mounting on the chassis (2).

9. Chassis according to one of the preceding claims, **characterized in that** the lifting support (4, 5, 6, 7, 8) has an actuating device (11) for moving, in particular pivoting, the supporting unit (9) between a withdrawn rest position and a supporting position.

10. Chassis according to one of the preceding claims, **characterized in that** the extendable supporting unit (9) and possibly the actuating device (11) can be actuated manually or by way of a drive, in particular a motor or a cylinder.

11. Chassis according to one of the preceding claims, **characterized in that** the lifting support (4, 5, 6, 7, 8) can be remote controlled, the supporting unit (9) and possibly the actuating device (11) having a wired or wireless communications device.

12. Chassis according to one of the preceding claims, **characterized in that** a plurality of lifting supports (4, 5, 6, 7, 8), in particular autonomous hydraulic lifting supports, are connected to a controller and can be actuated jointly, in particular can be height-adjusted.

13. Chassis according to one of the preceding claims, **characterized in that** the lifting support arrangement (3) comprises four lifting supports (4, 5, 6, 7, 8) which are arranged on the chassis (2) on both sides in the driving direction (34).

14. Road vehicle with a propulsion drive, a chassis (2) and a lifting support arrangement (3) with one or more lifting supports, **characterized in that** the chassis (2) is configured according to at least one of Claims 1 to 13.

15. Road vehicle according to Claim 14, **characterized in that** a motorized tractor head (15) of the road vehicle (1) has a tractor head chassis (16) which is connected to the vertically offset attachable chassis (18) via an adapter (19).

## Revendications

1. Châssis pour véhicules routiers motorisés (1), le châssis (2) présentant un agencement de vérins de levage (3) avec un ou plusieurs vérins de levage, **caractérisé en ce que** l'agencement de vérins de levage (3) comprend un vérin de levage (6, 7, 8) qui est monté sur un point de liaison commun (32) de plusieurs parties de châssis (20, 22, 28) au moyen de moyens de liaison communs, en particulier de vis, de rivets ou similaires.

2. Châssis selon la revendication 1, **caractérisé en ce que** l'agencement de vérins de levage (3) comprend un vérin de levage (4) qui est disposé de manière décalée par rapport au côté extérieur du véhicule en dessous d'un point de montée (31) dans une cabine de conducteur (30).

3. Châssis selon la revendication 1 ou 2, **caractérisé en ce qu'**un vérin de levage (6) est monté au niveau d'un point de liaison commun (32) d'un longeron (22) et d'un support d'essieu (28) d'un agencement d'essieu arrière (26) ou le vérin de levage (6) est monté du côté intérieur sur le longeron (22) et à côté d'un corps d'essieu (27) d'un agencement d'essieu arrière (26).

4. Châssis selon la revendication 1, 2 ou 3, **caractérisé en ce qu'**un vérin de levage (7, 8) est monté au niveau d'un point de liaison commun (32) d'un longeron (22) et d'un prolongement arrière (20) .

5. Châssis selon l'une quelconque des revendications précédentes, **caractérisé en ce qu'**un vérin de levage (8) est monté au niveau d'un adaptateur d'équilibrage de hauteur (21) d'un point de liaison commun (32) d'un longeron (22) et d'un prolongement arrière (20) décalé en hauteur.

6. Châssis selon l'une quelconque des revendications précédentes, **caractérisé en ce que** le châssis (2) est conçu pour un entraînement par traction avant avec un essieu avant moteur et présente un agencement d'essieu arrière mené (26), en particulier un essieu directeur de roue à suspension à ressort.

7. Châssis selon l'une quelconque des revendications précédentes, **caractérisé en ce que** le châssis (2) présente une unité de traction motorisée (15) du côté avant et un châssis d'attelage (18) avec un agencement d'essieu arrière (26).

8. Châssis selon l'une quelconque des revendications précédentes, **caractérisé en ce que** le vérin de levage (4, 5, 6, 7, 8) présente une unité de support de préférence télescopique (9) avec un support (12), en particulier un bâti en forme de caisson ou un boîtier et une ferrure d'attelage intégrée ou séparée (13) pour le montage sur le châssis (2).

9. Châssis selon l'une quelconque des revendications précédentes, **caractérisé en ce que** le vérin de levage (4, 5, 6, 7, 8) présente un dispositif de réglage (11) pour déplacer, en particulier faire pivoter, l'unité de support (9) entre une position de repos en retrait et une position de support.

10. Châssis selon l'une quelconque des revendications précédentes, **caractérisé en ce que** l'unité de support pouvant être déployée (9) et éventuellement le dispositif de réglage (11) peut/peuvent être actionné(e)(s) manuellement ou par un entraînement, en particulier un moteur ou un cylindre.

11. Châssis selon l'une quelconque des revendications précédentes, **caractérisé en ce que** le vérin de levage (4, 5, 6, 7, 8) peut être commandé à distance, l'unité de support (9) et éventuellement le dispositif de réglage (11) présentant un dispositif de communication par fil ou sans fil.

12. Châssis selon l'une quelconque des revendications précédentes, **caractérisé en ce que** plusieurs vérins de levage (4, 5, 6, 7, 8), en particulier des vérins de levage hydrauliques autonomes sont connectés à une commande et peuvent être actionnés, en particulier mis à niveau, en commun.

13. Châssis selon l'une quelconque des revendications précédentes, **caractérisé en ce que** l'agencement de vérins de levage (3) comprend quatre vérins de levage (4, 5, 6, 7, 8) qui sont disposés dans la direction de conduite (34) des deux côtés sur le châssis (2).

14. Véhicule routier comprenant un entraînement de conduite, un châssis (2) et un agencement de vérins de levage (3) avec un ou plusieurs vérins de levage, **caractérisé en ce que** le châssis (2) est réalisé selon au moins l'une des revendications 1 à 13.

15. Véhicule routier selon la revendication 14, **caractérisé en ce qu'**une unité de traction motorisée (15) du véhicule routier (1) présente un châssis d'unité de traction (16) qui est raccordé au châssis d'attelage décalé en hauteur (18) par le biais d'un adaptateur (19).
